# EUROPÄISCHE PATENTANMELDUNG

(11) **EP 2 028 224 A1**
(43) Veröffentlichungstag der Anmeldung: **25.02.2009**
(21) Anmeldenummer: 07014928.1
(22) Anmeldetag: 30.07.2007
(51) Int. Cl.: C08K 3/36, C08K 5/00, C08K 9/06, C08K 5/092, C08K 5/10, C08K 5/134, C08K 5/42, C08K 5/521, C08K 9/00

(54) **Weichmacherzusammensetzung**

(71) Anmelder: Nanoresins AG, 21502 Geesthacht (DE)
(72) Erfinder: Kühner, Uwe Dietrich, Dr., 20457 Hamburg (DE)
(74) Vertreter: Keussen, Christof

(57) **Zusammenfassung**

Gegenstand der Erfindung ist eine Zusammensetzung, die wenigstens einen Weichmacher und Siliciumdioxidpartikel mit einer mittleren Teilchengröße von 150 nm oder weniger enthält. Erfindungsgemäß beträgt der Anteil der Siliciumdioxidpartikel 10 bis 80 Gew.-% und der Anteil der Weichmacher 90 bis 20 Gew.-% beträgt, wobei die Summe der Anteile der Siliciumdioxidpartikel und der Weichmacher wenigstens 80 Gew.-% beträgt. Die Erfindung ermöglicht es, Nanopartikel auf einfache Weise in jegliche polymeren Werkstoffe einzumischen.

## Beschreibung

Die Erfindung betrifft eine Weichmacherzusammensetzung. Es ist bekannt, polymere Werkstoffe wie zum Beispiel Polyurethane, Polyharnstoffe oder sogenannte Reaktionsharze mit Füllstoffen zu versehen, um bestimmte Eigenschaften des polymeren Werkstoffes zu modifizieren. Beispielsweise können auf diese Weise Schlagzähigkeit, Biegefestigkeit, Härte oder elektrisches Isolationsvermögen verbessert werden.

Ebenfalls ist es bekannt, polymeren Werkstoffen Weichmacher zuzusetzen, um beispielsweise deren mechanische Eigenschaften zu modifizieren oder auch durch Zusatz in der Regel kostengünstiger Weichmacher die Herstellungskosten zu senken.

Der Erfindung liegt die Aufgabe zu Grunde, eine einfach handhabbare Möglichkeit zum Einbringen von Füllstoffen in verschiedenste polymere Werkstoffe zur Verfügung zu stellen.

Gegenstand der Erfindung ist eine Zusammensetzung, die wenigstens einen Weichmacher und Siliciumdioxidpartikel mit einer mittleren Teilchengröße von 150 nm oder weniger enthält, dadurch gekennzeichnet, dass der Anteil der Siliciumdioxidpartikel 10 bis 80 Gew.-% und der Anteil der Weichmacher 90 bis 20 Gew.-% beträgt, wobei die Summe der Anteile der Siliciumdioxidpartikel und der Weichmacher wenigstens 80 Gew.-% beträgt.

Zunächst seien einige im Rahmen der Erfindung verwendete Begriffe erläutert.

Die erfindungsgemäße Zusammensetzung enthält Weichmacher. Weichmacher sind inerte, organische Substanzen mit niedrigem Dampfdruck, die mit Polymeren lediglich physikalisch reagieren und eine homogene Phase ausbilden. Weichmacher in einem polymeren Werkstoff erhöhen beispielsweise dessen Biegbarkeit oder verbessern die Verarbeitbarkeit.

Der Begriff Weichmacher ist definiert in Ullmann's Encyclopedia of Industrial Chemistry, 6. Auflage, Band 27, Seite 217 ff. Auf diese Definition sowie die Erläuterung geeigneter Weichmacher wird im Rahmen dieser Anmeldung ausdrücklich Bezug genommen. Bevorzugt weist ein Weichmacher bei 20°C einen Dampfdruck von weniger als 0,1 hPa auf. Weitere bevorzugte Obergrenzen sind 0,01 und 0,001 hPa.

Die Zusammensetzung enthält ferner Siliciumdioxidpartikel mit einer mittleren Teilchengröße von 150 nm oder weniger. Es handelt sich hierbei um sogenannte Nanopartikel. Solche Nanopartikel sind beispielsweise herstellbar durch Ausfällen von SiO₂ aus wässrigen Alkalisilicatlösungen (sogenannte Kieselsole). Geeignete Herstellungsmethoden sind beispielhaft beschrieben in EP-A-1 366 112, deren Offenbarung durch Bezugnahme ebenfalls zum Gegenstand dieser Anmeldung gemacht wird.

Die Teilchengröße wurde bei 10 % Feststoffgehalt in toluolischer Dispersion per dynamischer Lichtstreuung auf einem Dynamic Light Scattering Particle Size Analyzer LB-550 der Firma Horiba bestimmt. Als Teilchengröße wird der D50-Wert der Partikelgrößenverteilung angegeben. Ein Maß für die Breite der Verteilung ist die Spanne. Sie ist dimensionslos und errechnet sich aus (D90-D10)/D50.

Die erfindungsgemäße Zusammensetzung besteht zu einem überwiegenden Teil lediglich aus Weichmachern und Siliciumdioxidpartikeln. Sie ist somit bevorzugt ein Vorprodukt, das mit weiteren Stoffen wie bspw. bevorzugt polymerisierbaren Stoffen zu einem Endprodukt weiterverarbeitet werden kann.

Die Erfindung hat erkannt, dass sich zum einen Siliciumdioxidnanopartikel ohne weiteres stabil in Weichmacher einarbeiten lassen und darin stabile Dispersionen bilden. Zudem lassen sich mittels einer erfindungsgemäßen Zusammensetzung Nanopartikel auch in solche polymeren Werkstoffe einarbeiten, in die ein unmittelbares Einarbeiten von Nanopartikeln nicht oder nur unter Schwierigkeiten möglich ist. Beispielhaft genannt sei Weich-PVC, Naturkautschuke oder dergleichen.

Im Rahmen der Erfindung ist es möglich, statt Siliciumdioxidnanopartikeln Nanopartikel anderer Metalloxide im Weichmacher einzuarbeiten und so eine erfindungsgemäße Zusammensetzung herzustellen. Beispielhaft genannt seien Metalloxide der dritten und vierten Hauptgruppe des Periodensystems, Übergangsmetalloxide, sowie Oxide der Lanthaniden und Actiniden. Weiter bevorzugt sind Al₂O₃, TiO₂ und ZnO₂.

Bei einer bevorzugten Ausführungsform der Erfindung beträgt die Summe der Anteile der Siliciumdioxidpartikel und der Weichmacher an der erfindungsgemäßen Zusammensetzung wenigstens 85 Gew.-%, weiter bevorzugte Mindestanteile sind 90 Gew.-%, 95 Gew.-%, 97 Gew.-%, 98 Gew.-%, 99 Gew.-%, 99,5 Gew.-%, 99,8 Gew.-% und 99,9 Gew.-%.

Der Anteil der Siliciumdioxidpartikel an der Gesamtmasse der erfindungsgemäßen Zusammensetzung beträgt vorzugsweise 20 bis 70 Gew.-%, weiter vorzugsweise 30 bis 60 Gew.-%, weiter vorzugsweise 40 bis 60 Gew.-%. Ein weiterer bevorzugter Bereich ist 50 bis 75 Gew.-%. Die erfindungsgemäße Zusammensetzung kann somit einen hohen Anteil Nanopartikel enthalten, ohne dass ihre Verarbeitbarkeit beeinträchtigt wird.

Der Anteil der Weichmacher an der Gesamtmasse der Zusammensetzung beträgt vorzugsweise 30 bis 80 Gew.-%, weiter vorzugsweise 40 bis 70 Gew.-%, weiter vorzugsweise 40 bis 60 Gew.-%.

Bei einer weiteren bevorzugten Variante ist die erfindungsgemäße Zusammensetzung lösungsmittelfrei. Dies bedeutet, dass sie Lösungsmittel (wässrige oder organische Lösungsmittel) nicht oder jedenfalls nicht in technisch relevantem Umfang enthält. Bevorzugte Höchstgrenzen sind 1 Gew.-%, 0,5 Gew.-% und 0,1 Gew.-%. Im Rahmen der Erfindung bezeichnet der Begriff Lösungsmittel jeden Stoff, der bei 20°C einem Dampfdruck von über 0,1 hPa, bevorzugt über 1 hPa, aufweist. Der Lösungsmittelgehalt kann als prozentualer Masseverlust auf einer Feuchtebestimmungswaage der Fa. Sartorius bei 5g Einwaage, 130°C und 15 min Laufzeit bestimmt werden.

Bevorzugt enthält die erfindungsgemäße Zusammensetzung ausschließlich Weichmacher und Siliciumdioxidpartikel. Bei einer weiteren bevorzugten Ausführungsform der Erfindung ist die Zusammensetzung frei von zur weiteren Polymerisierung fähigen Monomeren, Oligomeren oder Präpolymeren.

Die Siliciumdioxidpartikel weisen bevorzugt eine mittlere Teilchengröße von 4 bis 80 nm, vorzugsweise 8 bis 40 nm, weiter vorzugsweise 10 bis 30 nm, weiter vorzugsweise 10 bis 25 nm auf.

Die Siliciumdioxidpartikel sind bevorzugt kolloidal in der Zusammensetzung dispergiert. Kolloidal bedeutet, dass sie in der Dispersion im Wesentlichen vereinzelt vorliegen und keine technisch relevante Bildung von Aggregaten oder Agglomeraten vorliegt. Eine solche Aggregat- oder Agglomeratbildung der Siliciumdioxidpartikel könnte zu einer unerwünschten Erhöhung der Viskosität und damit Erschwerung der Verarbeitbarkeit der erfindungsgemäßen Zusammensetzung oder daraus hergestellter Zwischen- oder Endprodukte führen.

Die Weichmacher in der erfindungsgemäßen Zusammensetzung sind bevorzugt ausgewählt aus der Gruppe bestehend aus Phthalaten, Adipaten, Trimellitsäureestern, Phosphatestern, Sebacaten, Azelaten und Sulfonaten.

Beispielhaft seien als weitere geeignete Weichmacher Benzoldicarbonsäureester, Citronensäureester, 2-Hydroxy-1,2,3-Propantricarbonsäureester, Malonsäureester, Succinate, pflanzliche und tierische Öle, Benzoesäureester, Triethylenglycoldihexanoat, Tetraethylenglycoldiheptanoat, lineare Alkylbenzole (LAB), verzweigte Alkylbenzole (BAB), Polyethylenglycole, Polyethylenglycolether, Polypropylenglycole und Polypropylenglycolether genannt.

Die Siliciumdioxidpartikel weisen bevorzugt eine Oberflächenmodifizierung zur Kompatibilisierung mit dem Weichmacher auf. Eine solche Oberflächenmodifizierung dient bevorzug der Hydrophobierung der per se hydrophilen Oberfläche der Siliciumdioxidpartikel und damit der Verbesserung der Kompatibilität mit der hydrophoben Matrix des Weichmachers. Bekannte und der Fachwelt geläufige Methoden zur Oberflächenkompatibilisierung sind bspw. die Silanisierung der Oberfläche, die Alkoholyse der Oberfläche sowie die lediglich physikalische Anhaftung von hydrophoben Polymeren.

Die Silanisierung der Oberfläche der SiO₂-Teilchen geschieht bevorzugt mit Organosilanen oder Organosiloxanen. Diese Silanisierung ist eine in der Fachwelt geläufige Technologie.

Die Organosilane oder Organosiloxane sind bevorzugt ausgewählt aus der Gruppe bestehend aus Organosilanen der Formen R¹ₐH_{b}SiX_{4-a-b} und Organosiloxanen der Formel R¹ₙSiO(₄₋ₙ)_{/2}, worin jedes R¹ unabhängig voneinander ausgewählt ist aus Kohlenwasserstoffresten mit 1 bis 18 Kohlenstoffatomen oder organofunktionellen Kohlenwasserstoffresten mit 1 bis 18 Kohlenstoffatomen, jedes X unabhängig voneinander ausgewählt ist aus einem Halogenatom oder Alkoxyresten mit 1 bis 18 Kohlenstoffatomen, a = 0, 1, 2 oder 3, b = 0 oder 1, a+b = 1, 2 oder 3, unter der Voraussetzung, dass, wenn b = 1, dann a+b = 2 oder 3 und n eine ganze Zahl von 2 bis einschließlich 3 ist.

Besonders bevorzugt wird ein Halogensilan, weiter vorzugsweise ein Chlorsilan verwendet. Die Silane können funktionalisiert sein, beispielsweise mit polymerisierbaren Gruppen, insbesondere Vinylgruppen. Im Rahmen der Erfindung ist es möglich, zwei Silanisierungsschritte mit unterschiedlichen Silanen durchzuführen. Beispielsweise kann lediglich in einem der beiden Silanisierungsschritte ein funktionalisiertes Silan, bevorzugt ein Vinylsilan, eingesetzt werden. Ebenfalls ist es möglich, Mischungen funktionalisierter und nicht funktionalisierter Silane in einem Silanisierungsschritt einzusetzen.

Zur Oberflächenmodifizierung können die SiO₂-Partikel mit monohydrischen Alkolen, Polyolen oder Mischungen daraus behandelt werden. Gesättigte Primäralkohole sind bevorzugt. Durch die Behandlung binden Silanolgruppen auf der Oberfläche des SiO₂-Partikel chemisch mit den Hydroxygruppen des Alkohols, so dass an die Oberfläche gebundene Estergruppen entstehen. Diese Technik ist beschrieben bspw. in US-A-2801185.

Eine Oberflächenmodifizierung mittels primär physikalisch anhaftender Polymere wie z. B. Polyorganosiloxanen ist bspw. in EP 0 306 862 B1 offenbart.

Gegenstand der Erfindung ist ferner die Verwendung einer erfindungsgemäßen Zusammensetzung zum Einbringen von Siliciumdioxidpartikeln in einen polymeren Werkstoff. Die erfindungsgemäße Zusammensetzung ist eine lagerstabile, einfach handhabbare Möglichkeit, Nanopartikel in jegliche Art von polymerisierbaren Werkstoffen einzubringen. Besonders vorteilhaft ist die erfindungsgemäße Verwendung bei solchen polymerisierbaren Werkstoffen, in die sich auf herkömmliche Weise Nanopartikel nur sehr schwer einarbeiten lassen. Beispielhaft genannt seien thermoplastische Werkstoffe oder PVC-Werkstoffe, insbesondere Weich-PVC; Naturkautschuk, Butylkautschuke, Acrylatkautschuke, Styrol-Butadien-Kautschuke (SBR), ggf. hydrierte Nitril-Butadien-Kautschuke etc.

Der Anteil der durch die erfindungsgemäße Verwendung eingebrachten Siliciumdioxidpartikel an der Gesamtmasse (Summe aus der Masse des polymerisierbaren Werkstoffs und der erfindungsgemäßen Zusammensetzung aus Weichmacher und Siliciumdioxidpartikel) beträgt vorzugsweise 1 bis 50 Gew.-%, vorzugsweise 1 bis 30 Gew.-%, weiter vorzugsweise 1 bis 20 Gew.-%, weiter vorzugsweise 1 bis 10 Gew.-%, weiter vorzugsweise 2 bis 6 Gew.-%.

Ausführungsbeispiele der Erfindung werden nachfolgend beschrieben.

### Beispiel 1: Herstellung einer Siliciumdioxiddispersion in Isopropanol

Eine handelsübliche wässrige Alkalisilicatlösung mit einem Wassergehalt von 47 % und einem Verhältnis von SiO₂ zu Na₂O von 2,4 wurde mit demineralisiertem Wasser auf einen Wassergehalt von 97 % verdünnt. 100 Teile dieser verdünnten Lösung wurden mit einer Rate von 20 Teilen pro Stunde durch eine mit einem handelsüblichen sauren Ionenaustauscher gefüllten Säule geleitet und danach einer Destillationsvorlage zugeführt, in der die zulaufende deionisierte Silicatlösung bei Siedetemperatur gehalten wurde und das Wasser abdestillierend aus der Lösung entfernt wurde. Nach dem Ende des Zulaufes wurde das gebildete Kieselsäuresol durch weiteres Erhitzen auf 10 Teile eigeengt. Der pH-Wert wurde auf 10,5 bis 11 eingestellt. 100 Teile dieses Sols wurden mit 2000 Teilen Isopropanol vermischt und das Wasser durch atmosphärische Destillation bis auf einen nach der Karl-Fischer-Methode bestimmten Gehalt von kleiner als 0,1 % entfernt.

### Beispiel 2

### Herstellung einer Siliciumdioxiddispersion in Toluol

In einem Dreihalskolben wurden 63 g Chlortrimethylsilan in 1260 g THF vorgelegt und unter intensivem Rühren 1050 g Kieselsol (Levasil 200/40%, BET=200 m2/g, 40% SiO2, Na+ mit Ionentauscher entfernt) über einen Tropftrichter zugetropft.

Innerhalb einer Stunde hatten sich zwei Phasen gebildet, die in einem Scheidetrichter getrennt wurden. Die Unterphase enthielt mehr al 99 % des Feststoffs, während die Oberphase einen Großteil des Wassers enthielt. Die Unterphase wurde mit 140 g THF verdünnt und unter Rühren 63 g Chlortrimethylsilan dazu gegeben. Nach einer Stunde Rühren wurde in einen Scheidetrichter überführt.

Innerhalb von einer Stunde hatten sich wiederum zwei Phasen gebildet, die getrennt abgelassen wurden. Die Oberphase bestand hauptsächlich aus Wasser und THF.

Die Unterphase wurde in einen Dreihalskolben überführt und mit 400 g Toluol verdünnt. Dann wurde unter Zugabe von weiterem Toluol ein Gemisch aus THF, Wasser und Toluol abdestilliert. Die Zugabe des Toluols erfolgte so, dass die Lösung nicht trocken fällt. Es wurde destilliert bis die Siedetemperatur von Toluol annähernd erreicht war.

Das so erhaltene, noch saure Toluol-Sol wurde unter Rückfluss erhitzt und das zurückströmende Destillat über eine mit Natriumcarbonat gefüllte Säule geleitet. Nach 6 h Rückfluss reagierte das Sol nicht mehr sauer.

### Beispiel 3:

In einem Kolben werden 751,5 g DINP (Diisononylphthalat) vorgelegt und 1315 g einer Dispersion von SiO₂-Nanopartikeln in Toluol des Beispiels 2 (mittlere Teilchengröße 20 nm, Feststoffgehalt 38,1 Gew.-%) unter intensivem Rühren zugegeben. Das Lösungsmittel wird bei 80°C im Vakuum entfernt. Man erhält eine klare Dispersion mit einer hohen Stabilität. Die Viskosität wurde bei 25° C auf einem Brookfield-Viskosimeter RVDV-II+ mit Spindel 42 bei 100 min gemessen. Sie beträgt 825 mPas. Die Dispersion ist bei 50°C 9 Monate stabil und zeigt nach dieser Zeit nur einen Viskositätsanstieg von 3 %.

### Beispiel 4:

In einem Kolben werden 498,3 g DINP mit 200 g Isopropanol verdünnt. 957,3 g einer Dispersion von SiO₂-Nanopartikeln in Isopropanol des Beispiels 1 (mittlere Teilchengröße 25 nm, Feststoffgehalt 34,7 %) werden unter intensivem Rühren hinzugegeben. Das Lösungsmittel wird bei 50°C im Vakuum entfernt. Man erhält eine trübe Paste mit einer Viskosität von 1,8 Pas.

### Beispiel 5:

60 g Benzyl-2-Ethylhexyladipat (Adimoll BO, Lanxess) werden mit 30 g Toluol verdünnt. Unter Rühren werden 105,0 g einer SiO₂-Dispersion aus Beispiel 2 dazugegeben. Das Lösungsmittel wird bei 60°C im Vakuum entfernt. Man erhält eine milchige Paste.

### Beispiel 6:

40 g Bis(2-propylheptyl)phthalat wird mit 30 g Toluol verdünnt. Unter Rühren werden 109,7 g einer SiO₂-Dispersion aus Beispiel 2 hinzugegeben. Das Lösungsmittel wird bei 60°C im Vakuum entfernt. Man erhält eine fließfähige Dispersion.

### Beispiel 7:

1.574,8 g einer Dispersion von SiO₂-Nanopartikeln in Toluol aus Beispiel 2 werden mit 250 g Toluol verdünnt. Unter Rühren werden 600 g Bis(2-propylheptyl)phthalat (Palatinol 10-P, BASF) hinzugegeben. Das Lösungsmittel wird bei 80°C im Vakuum entfernt. Man erhält eine klare Flüssigkeit mit einer Viskosität von 1 Pas.

### Vergleichsbeispiel 1:

Eine pyrogene Kieselsäure (Aerosil R812s, Degussa) wird in Palatinol 10-P suspendiert und gemischt, bis eine homogene Dispersion entstanden ist. Es wird zunächst eine Dispersion mit einem Feststoffgehalt von 20 Gew.-% hergestellt. Diese wird durch Zugabe von weiterem Palatinol 10-P sukzessive weiter verdünnt. Die Viskosität von Mischungen mit unterschiedlichem Feststoffgehalt wird bestimmt.

**Tabelle 1**

| Feststoffgehalt [Gew.-%] | Viskosität [Pas] |
|---|---|
| 20 | 168 |
| 17,5 | 8,4 |
| 15 | 2,5 |
| 10 | 0,5 |

Aus der Tabelle ist zu ersehen, dass die Mischung mit einem Aerosil-Gehalt von 17,5 Gew.-% eine Viskosität von 8,4 Pas aufweist. Das ist mehr als 8 Mal so hoch wie die erfindungsgemäße Mischung gemäß Beispiel 6 mit einem Feststoffgehalt von 50 Gew.-%.

### Beispiel 8: Herstellung von Dichtstoffen

In der nachfolgenden Tabelle 2 werden drei verschiedene Rezepturen für Dichtstoffe auf der Basis von Polyetherpolyurethanen angegeben. Bei der Formulierung 1 handelt es sich um ein nicht erfindungsgemäßes Vergleichsbeispiel, das als Weichmacher Palatinol 10-P enthält. Bei der erfindungsgemäßen Formulierung 2 wird dieser Weichmacher ersetzt durch eine erfindungsgemäße Zusammensetzung gemäß Beispiel 7. Bei der wiederum als Vergleichsbeispiel dienenden Formulierung 3 wird der Weichmacher ersetzt durch eine aerosilhaltige Zusammensetzung gemäß Vergleichsbeispiel 1.

**Tabelle 2**

| Formulierung 1 | | Formulierung 2 | | Formulierung 3 | |
|---|---|---|---|---|---|
| Komponente | Masse | Komponente | Masse | Komponente | Masse |
| | [g] | | [g] | | [g] |
| ST 61 | 37,45 | ST 61 | 37,45 | ST 61 | 37,45 |
| Palatinol 10-P | 13,30 | Mischung aus Beispiel 6 | 13,30 | Mischung aus Vergleichsbeispiel 1 | 13,30 |
| Disperplast | 1,00 | Disperplast | 1,00 | Disperplast | 1,00 |
| TiO₂ | 2,00 | TiO₂ | 2,00 | TiO₂ | 2,00 |
| Imerseal 50 | 20,00 | Imerseal 50 | 20,00 | Imerseal 50 | 20,00 |
| Socal U1S2 | 20,00 | Socal U1S2 | 20,00 | Socal U1S2 | 20,00 |
| Aerosil R202 | 2,00 | Aerosil R202 | 2,00 | Aerosil R202 | 2,00 |
| VTMO | 2,00 | VTMO | 2,00 | VTMO | 2,00 |
| Adhesions Promoter ST | 1,50 | Adhesions Promoter ST | 1,50 | Adhesions Promoter ST | 1,50 |
| TK 14 50 %ig in Shellsol | 0,20 | TK 14 50 %ig in Shellsol | 0,20 | TK 14 50 %ig in Shellsol | 0,20 |
| Anteil Füllstoff | 0 % | | 6,7% | | 2,3 % |

### Die Herstellung der Formulierungen erfolgt folgendermaßen:

Zuerst werden das Polyetherpolyurethan ST-61 (silanterminiertes Polyetherpolyurethan, Molgewicht ca. 9.000 gmol⁻¹, hanse chemie), Palatinol 10-P (Phthalsäureester isomerer C₁₀-Alkohole, BASF) bzw. Mischung aus Beispiel 6 oder Vergleichsbeispiel 1 in einem Mischbecher vorgelegt und in einem Hauschild Speed Mixer DAC 150 FV gemischt, bis die Komponenten homogen dispergiert sind. Dann werden TiO₂ (Tronox, Kerr-McGea Pigments GmbH & Co. KG), Imerseal 50 (Ca-CO₃, Imerys), Socal U132 (gefälltes CaCO₃, Socal) und Aerosil R202 (Degussa) dazugegeben und eingemischt. Jeweils einzeln werden VTMO (Vinyltrimethoxysilan), der Adhesions Promoter ST (Silangemisch, hanse chemie AG) und TK 14 (Zinkkatalysator, 50%ig in Shellsol, hanse chemie AG) eingemischt. Dann wird das pastöse Produkt entgast und mit einem Rakel zu einer Platte ausgestrichen.

Die Platten werden 7 Wochen bei Raumtemperatur gelagert, um vollständig auszuhärten. Aus den Platten werden Prüfkörper analog DIN 53504 / ISO 37 (Form Die S2) ausgestanzt und auf einer Zugprüfmaschine der Fa. Zwick Bruchdehnung, Zugfestigkeit und E-Modul (100 % Dehnung) bestimmt. Die Shore-Härte wurde nach DIN 53505 gemessen. Der Weiterreißwiderstand wird entsprechend ASTM D624-0 (Die C) auf der Zugprüfmaschine bestimmt.

Die Ergebnisse sind in Tabelle 3 zusammengefasst:

**Tabelle 3**

| Formulierung | 1 | 2 | 3 |
|---|---|---|---|
| Weiterreißwiderstand | 9,7 | 14,9 | 12,7 |
| Zugfestigkeit | 2,54 | 3,44 | 3,35 |
| Bruchdehnung | 173 | 163 | 177 |
| E-Modul (100 %) | 1,00 | 1,04 | 1,13 |
| Shore A | 58 | 71 | 64 |

Die erfindungsgemäße Formulierung 2 weist gegenüber der Formulierung 1 einen um mehr als die Hälfte verbesserten Weiterreißwiderstand und eine um 35 % verbesserte Zugfestigkeit auf. Die Shore-A-Härte ist um 13 Einheiten erhöht. Lediglich die Bruchdehnung ist minimal reduziert.

Gegenüber der Formulierung 3 zeigt das erfindungsgemäße Beispiel Vorteile insbesondere hinsichtlich des Weiterreißwiderstands und der Shore-A-Härte.

## Patentansprüche

1. Zusammensetzung, die wenigstens einen Weichmacher und Siliciumdioxidpartikel mit einer mittleren Teilchengröße von 150 nm oder weniger enthält, **dadurch gekennzeichnet, dass** der Anteil der Siliciumdioxidpartikel 10 bis 80 Gew.-% und der Anteil der Weichmacher 90 bis 20 Gew.-% beträgt, wobei die Summe der Anteile der Siliciumdioxidpartikel und der Weichmacher wenigstens 80 Gew.-% beträgt.

2. Zusammensetzung nach Anspruch 1, **dadurch gekennzeichnet, dass** die Summe der Anteile der Siliciumdioxidpartikel und der Weichmacher wenigstens 85 Gew.-%, vorzugsweise wenigstens 90 Gew.-%, weiter vorzugsweise wenigstens 95 Gew.-%, weiter vorzugsweise wenigstens 97 Gew.-%, weiter vorzugsweise wenigstens 98 Gew.-%, weiter vorzugsweise wenigstens 99 Gew.-% beträgt.

3. Zusammensetzung nach Anspruch 1 oder 2, **dadurch gekennzeichnet, dass** der Anteil der Siliciumdioxidpartikel 20 bis 70 Gew.-%, vorzugsweise 30 bis 60 Gew.-%, weiter vorzugsweise 40 bis 60 Gew.-% beträgt.

4. Zusammensetzung nach einem der Ansprüche 1 bis 3, **dadurch gekennzeichnet, dass** der Anteil der Weichmacher 30 bis 80 Gew.-%., vorzugsweise 40 bis 70 Gew.-%, weiter vorzugsweise 40 bis 60 Gew.-% beträgt.

5. Zusammensetzung nach einem der Ansprüche 1 bis 4, **dadurch gekennzeichnet, dass** sie lösemittelfrei ist.

6. Zusammensetzung nach einem der Ansprüche 1 bis 5, **dadurch gekennzeichnet, dass** sie ausschließlich Weichmacher und Siliciumdioxidpartikel enthält.

7. Zusammensetzung nach einem der Ansprüche 1 bis 6, **dadurch gekennzeichnet, dass** die Siliciumdioxidpartikel eine mittlere Teilchengröße von 4 bis 80 nm, vorzugsweise 8 bis 40 nm, weiter vorzugsweise 10 bis 30 nm, weiter vorzugsweise 10 bis 25 nm aufweisen.

8. Zusammensetzung nach einem der Ansprüche 1 bis 7, **dadurch gekennzeichnet, dass** die Siliciumdioxidpartikel kolloidal in der Zusammensetzung verteilt sind.

9. Zusammensetzung nach einem der Ansprüche 1 bis 8, **dadurch gekennzeichnet, dass** die Weichmacher ausgewählt sind aus der Gruppe bestehend aus Phthalaten, Adipaten, Trimellitsäureestern, Phosphatestern, Sebacaten, Azelaten und Sulfonaten.

10. Zusammensetzung nach einem der Ansprüche 1 bis 9, **dadurch gekennzeichnet, dass** die Siliciumdioxidpartikel eine Oberflächenmodifizierung zur Kompatibilisierung mit dem Weichmacher aufweisen.

11. Zusammensetzung nach Anspruch 10, **dadurch gekennzeichnet, dass** die Oberflächenmodifizierung ausgewählt ist aus der Gruppe bestehend aus Silanisierung, Alkoholyse und physikalisch anhaftenden Polymeren.

12. Verwendung einer Zusammensetzung nach einem der Ansprüche 1 bis 11 zum Einbringen von Siliciumdioxidpartikeln in einen polymeren Werkstoff.

13. Verwendung nach Anspruch 12, **dadurch gekennzeichnet, dass** der Werkstoff ein thermoplastischer Werkstoff oder PVC-Werkstoff ist.

14. Verwendung nach Anspruch 12, **dadurch gekennzeichnet, dass** der Werkstoff ein Elastomer oder Kautschuk ist.

15. Verwendung nach Anspruch 14, **dadurch gekennzeichnet, dass** der Werkstoff ein Naturkautschuk oder Siliconkautschuk ist.

16. Verwendung nach einem der Ansprüche 12 bis 15, **dadurch gekennzeichnet, dass** der Anteil von mittels der Zusammensetzung nach einem der Ansprüche 1 bis 11 eingebrachten Siliciumdioxidpartikel an der Gesamtmasse 1 bis 50 Gew.-%, vorzugsweise 1 bis 30 Gew.-%, weiter vorzugsweise 1 bis 20 Gew.-%, weiter vorzugsweise 1 bis 10 Gew.-%, weiter vorzugsweise 2 bis 6 Gew.-% beträgt.
